# EUROPÄISCHE PATENTSCHRIFT

(11) **EP 0 637 395 B1**
(45) Veröffentlichungstag und Bekanntmachung des Hinweises auf die Patenterteilung: **21.05.1997**
(21) Anmeldenummer: 94905725.1
(22) Anmeldetag: 28.01.1994
(51) Int. Cl.: G07B 15/04, G07C 1/30

(54) **EIN- UND AUSGABEVORRICHTUNG FÜR RUNDE, EIN IDENTIFIKATIONS- UND/ODER KOMMUNIKATIONSELEMENT AUFWEISENDE PARKKARTEN ZUR GEBÜHRENPFLICHTIGEN BETÄTIGUNG EINER PARKSCHRANKE**
RECEIVING AND ISSUING DEVICE FOR ROUND PARKING CARDS HAVING AN IDENTIFICATION AND/OR COMMUNICATION COMPONENT FOR THE FEE-PAYING ACTUATION OF A CAR PARK BARRIER
DISPOSITIF D'INTRODUCTION ET D'EMISSION POUR CARTES DE STATIONNEMENT RONDES CONTENANT UN ELEMENT D'IDENTIFICATION ET/OU DE COMMUNICATION POUR L'ACTIONNEMENT PAYANT D'UNE BARRIERE DE PARC DE STATIONNEMENT

(30) Priorität: 20.02.1993 DE 9302481 U; 13.01.1994 DE 4400744
(43) Veröffentlichungstag der Anmeldung: 08.02.1995
(73) Patentinhaber: Farmont Technik GmbH & Co. KG, D-40217 Düsseldorf (DE)
(72) Erfinder: FARMONT, Hans, D-40885 Ratingen (DE)
(74) Vertreter: Sparing - Röhl - Henseler Patentanwälte
(86) Internationale Anmeldenummer: EP9400243
(87) Internationale Veröffentlichungsnummer: WO9419772

(56) Entgegenhaltungen:
- DE-A- 2 557 984
- DE-A- 3 307 986

## Beschreibung

Die Erfindung betrifft eine Ein- und Ausgabevorrichtung für runde, ein Identifikations- und/oder Kommunikationselement aufweisende Parkkarten, insbesondere Parkchips, zur gebührenpflichtigen Betätigung einer Parkschranke.

Parkkarten werden beim Passieren von Einfahrtkontrollstationen eines Parkhauses oder Parkgeländes dem jeweiligen Benutzer ausgegeben. Die für eine Parkgebührenberechnung erforderlichen Daten, wie insbesondere Einfahrtzeit, Datum und Nummer der Einfahrtkontrollstation, können, wie aus EP 0 176 465 bekannt, entweder direkt auf der Parkkarte, die hierfür ein geeignetes elektronisches Bauelement trägt, abgespeichert oder zusammen mit einer individuellen Kennung der Parkkarte an einen zentralen Rechner übertragen werden, wie dies aus DE 3307986 bekannt ist. Dabei haben diese Parkkarten den großen Vorteil, wiederverwendbar zu sein, und zwar als Einzelparkkarte für verschiedene Benutzer, als Debitparkkarte oder als Zugriffskarte für Dauerparker.

Aus DE-A-2 557 984 ist eine Vorrichtung zur automatischen Ausgabe und Rücknahme von scheibenförmigen Kontrollmarken bei Anlagen mit gebührenpflichtiger Benutzung bekannt, wobei sich der Transportweg für eine Rücknahme der Kontrollmarken oberhalb des, d.h. funktional vor dem Transportweg für eine Ausgabe der Kontrollmarken befindet.

Die wiederholte Ein- und Ausgabe der Parkkarten verlangt Ein- und Ausfahrtkontrollstationen, die die auszugebenden bzw. wieder eingegebenen Parkkarten lagern, einer Lese-Schreibstation zuführen und in Ausgabeöffnungen befördern, die dem Parkhausbenutzer zugänglich sind. Für die Parkzeit- und -gebührenberechnung müssen die Parkkarten deshalb mehrere Transportwege zurücklegen, wofür im allgemeinen Transportbänder oder Transportrollen vorgesehen sind. Dadurcn bedingt ist eine konstruktiv aufwendige Gestaltung der Ein- und Ausgabevorrichtungen der Kontrollstationen, die zudem störanfällig ist. Ein reibungsloser Betrieb der Ausgabe und/oder Rücknahme der Parkkarten ist somit nicht gewährleistet.

Aufgabe der Erfindung ist es daher, eine Ein- und Ausgabevorrichtung für runde, ein Identifikations- und/oder Kommunikationselement aufweisende Parkkarten zur gebührenpflichtigen Betätigung einer Parkschranke zu schaffen, die sicher und zuverlässig arbeitet und dabei einfach aufgebaut ist.

Diese Aufgabe wird gemäß dem Anspruch 1 gelöst.

Hierdurch wird eine Ein- und Ausgabevorrichtung geschaffen, die die formbedingten Vorteile runder, scheibenförmiger Parkkarten, insbesondere ihr Rollvermögen, für den Ein- und Ausgabevorgang nutzt, weitgehend ohne angetriebene Beförderungssysteme arbeitet und dabei die für eine Ausgabe und Rücknahme der Parkkarten erforderlichen Transportwege miteinander kombiniert und dadurch auch minimiert.

Die Parkkarten gelangen jeweils einzeln von einem Stapel Parkkarten abgetrennt in einen Fallschacht, wo aufgrund eines vorgegebenen Gefälles die Parkkarten unter dem Einfluß ihres Eigengewichts abwärts fallen bzw. rollen. Der Fallschacht umfaßt Führungsschächte mit unterschiedlichen Gefällen, die die Parkkarten zu wählbaren Orten leiten. Das Passieren des Fallschachts wird dabei auch zugleich zum Lesen der jeweiligen Kennung der Parkkarten und gegebenenfalls Kommunizieren mit einer Meßstelle genutzt. Sofern die Ansprechgeschwindigkeit der Meßstelle für die vorbeifallenden oder vorbeirollenden Parkkarten zu gering ist, können Arretierungsmittel vorgesehen sein, die die Fall- bzw. Laufgeschwindigkeit der Parkkarten verzögern bzw. einen zeitweiligen Stillstand der Parkkarten erlauben.

Der mindestens eine Leitschacht und die Seitenschächte besitzen vorzugsweise begrenzende Seitenwände, die Gleit- oder Laufflächen für die abwärts sich bewegenden Parkkarten bilden. Die Leit- und Seitenschächte sind mit ihren Abmessungen dazu vorzugsweise an die Dicke der Parkscheiben angepaßt, um ein Verkanten oder Kiopen der Parkkarten aus der gewünschten aufrechten Stellung zu vermeiden. Der Querschnitt der Schächte ist folglich vorzugsweise rechteckförmig und an den Querschnitt der Parkkarten angepaßt.

Um eine gleichmäßige Abwärtsbewegung der Parkkarten ohne Drehen und Wenden der Parkkarten bei ihrem Lauf durch den Fallschacht mit Leit- und Seitenschächten sicherzustellen, fallen die Parkkarten durch den Leitschacht in der aufrechten Stellung und die Seitenschächte zweigen derart von dem Leitschacht ab, daß die Parkkarten über ihre Umfangsfläche abrollend von dem mindestens einen zentralen Leitschacht in die Seitenschächte einlaufen können.

Die Seitenschächte können von einem Ausgabe- und einem Eingabe(Rücknahme)schacht gebildet werden, wobei der Ausgabeschacht ein vom Leitschacht wegführendes Gefälle und der Eingabeschacht ein zum Leitschacht hinführendes Gefälle aufweist. Vorzugsweise ist der Eingabeschacht oberhalb des Ausgabeschachts geführt, so daß mit einer Meßstelle gearbeitet werden kann, die zwischen den Mündungsbereichen der Seitenschächte im Leitschacht angeordnet ist. Um gegebenenfalls auch die Entnahme der Parkkarten aus dem Ausgabeschacht über die eine Meßstelle im Leitschacht überwachen bzw. steuern zu können, kann die Meßstelle mehrere für den Empfang und gegebenenfalls die Abgabe von elektromagnetischen Signalen geeigneten Satelliten umfassen.

Der Ausgabeschacht kann desweiteren mit einer schwenkbaren Roll- und Gleitfläche ausgebildet sein, wodurch deren Neigung und damit das Gefälle im Ausgabekanal veränderbar ist. Im Ausgabeschacht ist dann neben dem vom Leitschacht abwärts gerichteten und wegführenden Gefälle ein ebenfalls abwärts gerichtetes aber zum Leitschacht hinführendes Gefälle einstellbar. In eine Entnahmeposition gerollte Parkkarten können durch Schwenken der Roll- und Gleitfläche in den Leitschacht zurückbewegt werden. Gleichzeitig kann der Erstreckungsbereich der Roll- und Gleitfläche in einen Passierweg durch den Leitschacht derart gewählt werden, daß in wählbaren Schwenkstellungen der Passierweg blockiert oder freigegeben ist.

Die Vereinzelungseinrichtung kann in einfacher Weise von einem schachtförmigen Verengungsteil am bodenseitigen Ende des Vorratsbehälters gebildet werden, in dem sich die Parkkarten übereinander aufstapeln können. Für das Abstreifen der jeweils zuunterst liegenden Parkkarte kann ein Abstreifer vorgesehen sein, der vorzugsweise immer nur eine Parkkarte in den Fallschacht überführt. Dabei kann der Abstreifer die Parkkarten nacheinander an einen Einlaufbereich abgeben, der die Parkkarten für einen Eintritt in den Fallschacht ausrichtet.

Andere Vereinzelungseinrichtungen, beispielsweise unter Verwendung von Separatoren an den bodenseitigen Enden der Vorratsbehälter, sind ebenfalls einsetzbar.

Weitere Ausgestaltungen der Erfindung sind der nachfolgenden Beschreibung und den Unteransprüchen zu entnehmen.

Die Erfindung wird nachstehend anhand der in der beigefügten Abbildung dargestellten Ausführungsbeispiele näher erläutert.
- Fig. 1: zeigt schematisch einen Längsschnitt eines ersten Ausführungsbeispiels einer Ein- und Ausgabevorrichtung für eine Ein- und/oder Ausfahrtkontrollstation eines Parksystems zur gebührenpflichtigen Betätigung einer Parkschranke,
- Fig. 2: zeigt schematisch einen Längsschnitt eines zweiten Ausführungsbeispiels einer Ein- und Ausgabevorrichtung für eine Ein- und/oder Ausfahrtkontrollstation eines Parksystems zur gebührenpflichtigen Betätigung einer Parkschranke,
- Fig. 3: zeigt schematisch einen Längsschnitt eines Teilbereiches eines dritten Ausführungsbeispiels einer Ein- und Ausgabevorrichtung.

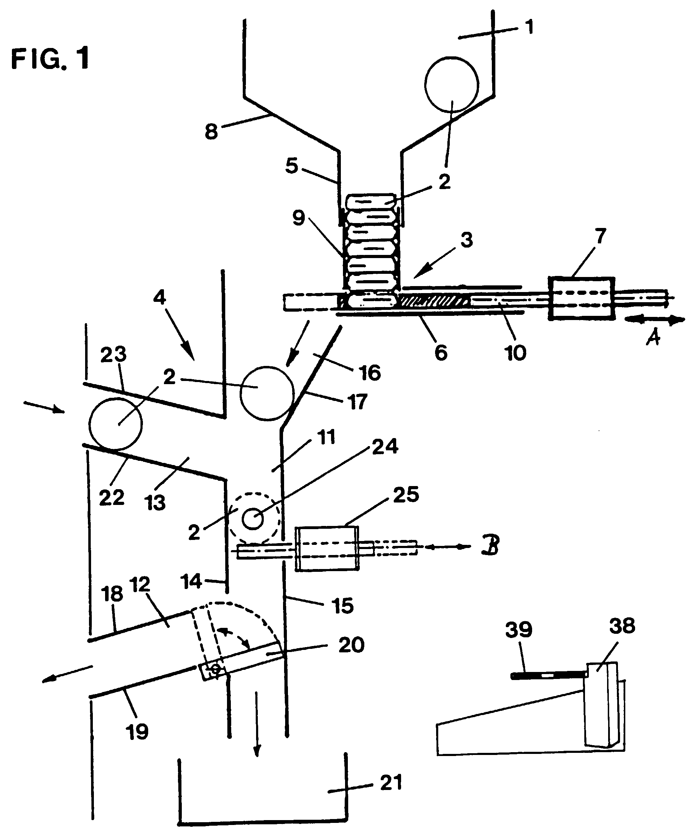

Das in Figur 1 dargestellte erste Ausführungsbeispiel einer Ein- und Ausgabevorrichtung für eine Ein- und/oder Ausfahrtkontrollstation eines Parksystems zur gebührenpflichtigen Betätigung einer Parkschranke 39 umfaßt einen Vorratsbehälter 1 für runde, ein Identifikations- und/oder Kommunikationselement aufweisende Parkkarten 2. Die Parkkarten 2 werden in dem Vorratsbehälter 1 gesammelt und für eine Ausgabe an Benutzer eines Parkhauses oder Parkgeländes bereitgehalten.

Bodenseitig weist der Vorratsbehälter 1 eine Vereinzelungseinrichtung 3 auf, mit der nacheinander einzelne Parkkarten 2 aus einem Parkkartenvorrat des Vorratsbehälters 1 abgetrennt werden können, um danach vereinzelt in einen anschließenden Fallschacht 4 zu gelangen.

Die Vereinzelungseinrichtung 3 umfaßt hier ein schachtförmiges Verengungsteil 5, das oberhalb einer Führungsbahn 6 endet, entlang dem ein Abstreifer 7 arbeitet. Das schachtförmige Verengungsteil 5 besitzt solche Abmessungen, daß sich in ihm mindestens ein Stapel flach aufeinander liegender Parkkarten 2 bildet, gegebenenfalls können auch mehrere nebeneinander angeordnete Stapel Parkkarten 2 im Verengungsteil 5 ausbildbar sein, wofür geeignete Gleitflächen im Verengungsteil 5 vorgesehen sein können. Für eine automatische Beschickung des Verengungsteils 5 mit Parkkarten 2 besteht das Verengungsteil 5 aus einem vorzugsweise senkrecht stehenden Schacht mit einwärts geneigten Einlaufflächen 8, die vorzugsweise im Bodenabschnitt des Vorratsbehälters 1 ausgebildet sind. Die Parkkarten 2 können sich dann aufgrund ihres Eigengewichts in dem Verengungsteil 5 liegend aufstapeln. Das Verengungsteil 5 kann dabei als Fortsatz unmittelbar am Boden des Vorratsbehälters 1 anschließen oder mit einem Ansatzteil 9 kombiniert sein.

Die jeweils zuunterst liegende Parkkarte 2 eines Parkkartenstapels in dem Verengungsteil 5 gelangt in Anlage mit der Führungsbahn 6 ohne seitliche Begrenzung durch das Verengungsteil 5, so daß die zuunterst liegende Parkkarte 2 für einen seitlichen Angriff durch den Abstreifer 7 freiliegt. Der Abstreifer 7 verfährt hierzu mittels eines Schiebers 10 in einer Vorwärtsbewegung gegen die Umfangsfläche der zuunterst liegenden Parkkarte 2 und bewegt sie in den Fallschacht 4. Der Schieber 10 bewegt sich dann wieder zurück in seine Ausgangsstellung, damit die zuvor über der zuunterst liegenden Parkkarte 2 liegende Parkkarte in die zuunterst liegende Stellung fallen kann. Die Bewegungsrichtungen des Schiebers 10 verdeutlicht der Pfeil A. Der Schieber 10 ist hier als ein Separator ausgebildet, der in einem tellerförmigen Abschnitt eine Ausnehmung für eine Aufnahme der jeweils zuunterst liegenden Parkkarte 2 aufweist.

Der Fallschacht 4 umfaßt einen zentralen Leitschacht 11 und einen ersten davon abzweigenden Seitenschacht 12 für die Ausgabe der vom Stapel abgetrennten Parkkarten 2 und einen zweiten vom Leitschacht 11 abzweigenden Seitenschacht 13 für die Rücknahme ausgegebener Parkkarten 2. Mit der Ausgabe und Eingabe der Parkkarten 2 durch diese Seitenschächte 12, 13 ist die Betätigung der nicht dargestellten Parkschranke verknüpft, wie nachfolgend noch näher dargelegt wird. Der Leitschacht 11 ist dabei so ausgebildet, daß er einen Passierweg in Form eines Verteilers für die Parkkarten schafft, benachbart zu dem die Seitenschächte 12, 13 abzweigen.

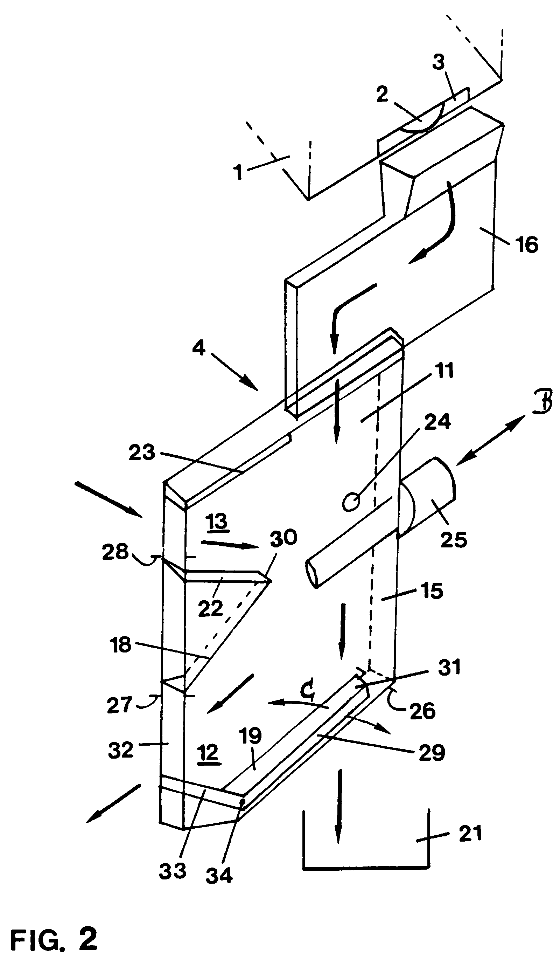

Der zentrale Leitschacht 11 ist mit einem Gefälle aufgestellt, damit die Parkkarten 2 sich unter ihrem Eigengewicht abwärts bewegen können. Vorzugsweise ist der zentrale Leitschacht 11 im wesentlichen vertikal ausgerichtet und besitzt eine Schachtbreite zwischen Seitenflächen 14, 15, die vorzugsweise nur geringfügig größer ist als der Durchmesser der Parkkarten 2. Hierdurch wird erreicht, daß die Parkkarten 2 gelenkt durch die Seitenflächen 14, 15 stehend, d.h. in aufrechter Stellung, nach unten fallen. Damit die Parkkarten 2 aus dieser aufrechten Stellung nicht in die flach liegende Stellung umkippen, ist die Querbreite 26 (vgl. Fig. 2) des zentralen Leitschachts 11 an die Dicke der Parkkarten 2 angepaßt. Der zentrale Leitschacht 11 besitzt folglich vorzugsweise einen rechteckförmigen Querschnitt. Um die Parkkarten 2 in der stehenden und dadurch rollfähigen Stellung in den Fallschacht 4 einbringen zu können, weist der Fallschacht 4 vorzugsweise eingangsseitig einen Einlaufabschnitt 16 auf, der die Vereinzelungseinrichtung 3 mit dem Fallschacht 4 verbindet. Dieser Einlaufabschnitt 16 kann hierzu über geeignete Gleit- und Führungsflächen 17 verfügen.

Der für die Ausgabe von Parkkarten 2 vorgesehene Seitenschacht 12 ist gegenüber der Horizontalrichtung abwärts geneigt und zweigt mit Abstand von dem Einlaufabschnitt 16 von dem zentralen Leitschacht 11 ab. Die Breite des Seitenschachts 12 zwischen zwei Seitenflächen 18, 19 ist vorzugsweise nur geringfügig größer als der Durchmesser der Parkkarten 2, die dann aus dem Leitschacht 11 um ihre Umfangsfläche rollend in den Seitenschacht 12 eintreten können und dort ohne die Gefahr des Springens abwärts laufen können. Die dazu verlaufende Querbreite 27 (vgl. Fig. 2) des Seitenschachts 12 ist insbesondere vorzugsweise so gewählt, daß die Parkkarten 2 in der rollfähigen, aufrechten Stellung gehalten werden und nicht flach umfallen. Das dem Leitschacht 11 gegenüberliegende Ende des Seitenschachts 12 ist als Entnahmeöffnung für die auszugebenden Parkkarten 2 an einer Außenseite der Ein- und/oder Ausgabevorrichtung ausbildbar.

Der Eintritt in den Seitenschacht 12 wird über eine Weiche 20 gesteuert, die wahlweise entweder den Durchgang des zentralen Leitschachts 11 oder den Durchgang des Seitenschachts 12 sperrt.

Vorzugsweise ist die Länge des zentralen Leitschachts 11 so gewählt, daß dieser über die Abzweigungsstelle des Seitenschachts 12 hinausragt und offen bzw. zum öffnen geeignet über einem Auffangbehälter 21 für benutzte Parkkarten 2 endet.

Räumlich gesehen oberhalb des Seitenschachts 12 zweigt der Seitenschacht 13 für die Eingabe gebrauchter Parkkarten 2 von dem zentralen Leitschacht 11 ab. Der Seitenschacht 13 ist zur Horizontalrichtung aufwärts geneigt, so daß die in den Seitenschacht 13 eingegebenen Parkkarten 2 unter Schwerkraftwirkung in den Leitschacht 11 zurückrollen. Hierzu ist die Breite des Seitenschachts 13 zwischen Seitenflächen 22, 23 vorzugsweise nur geringfügig größer als der Durchmesser der Parkkarten 2 und insbesondere die zugehörige Querbreite 28 (vgl. Fig. 2) vorzugsweise an die Dicke der Parkkarten 2 angepaßt, damit diese aus ihrer rollfähigen Stellung nicht umkippen. Die Querbreiten 27, 28 der Seitenschächte 12, 13 sind vorzugsweise gleich.

Der Seitenschacht 13 für die Eingabe zurückzugebender Parkkarten 2 ist vorzugsweise oberhalb des Seitenschachts 12 für die Ausgabe angeordnet, um nicht ordnungsgemäß abgerechnete Parkkarten 2 über den einen Seitenschacht 12 für die Ausgabe wieder ausgeben zu können.

In dem zentralen Leitschacht 11 ist zwischen den Abzweigungen der Seitenschächte 12, 13 für das Lesen und/oder Beschreiben eines Identifikations- und/oder Kommunikationselements der Parkkarten 2 und/oder ein Kommunizieren mit diesem eine Meßstelle 24 angeordnet. Je nach Ansprechgeschwindigkeit der Meßstelle 24 können auch Mittel vorgesehen sein, die die vorbeigleitenden Parkkarten 2 zeitweilig im Bereich der Meßstelle 24 festhalten. Bei dem dargestellten Ausführungsbeispiel werden diese Mittel von einem Schieber 25 gebildet, der den Schachtdurchgang des Leitschachts 11 bedarfsbezogen sperrt. Die Bewegungsrichtung des Schiebers 25 ist durch einen Pfeil B verdeutlicht.

Mittels einer nicht dargestellten Steuerung, an die die Funktionselemente, insbesondere Abstreifer 7, Schieber 25, Meßstelle 24 und Weiche 20 der beschriebenen Ein- und Ausgabevorrichtung sowie die Parkschranke 39 und deren Steuereinrichtung 38 angeschlossen sind, kann deren Betrieb wie nachstehend beschrieben erfolgen.

Zu Beginn eines Parkvorganges wird eine Parkkarte 2, ausgelöst durch ein Signalzeichen des Parkhausbenutzers, mittels Abstreifer 7 von dem Parkkartenstapel abgetrennt werden und fällt bzw. rollt durch die Schächte 11, 12 in eine für den Parkhausbenutzer erreichbare Ausgabeöffnung. Die Weiche 20 befindet sich dabei in der den Leitschacht 11 sperrenden Stellung (durchgezogene Linie), so daß die abgetrennte Parkkarte 2 durch den Leitschacht 11 fällt, und zwar bis auf die Weiche 20, von wo aus die Parkkarte 2 sich rollend durch den Seitenschacht 12 bewegen kann. Vor der Ausgabe wird in der von der Parkkarte 2 zu passierenden Meßstelle 24 in dem Fallschacht 4 der jeweilige Kenncode gelesen und an einen Rechner gegeben, der Einfahrtzeit, Datum und die Stationsnummer hinzufügt und speichert. Alternativ kann die Parkkarte 2 mit diesen Daten beschrieben werden. Mit der Entnahme der Parkkarte 2 aus der Ausgabeöffnung, die beispielsweise über eine Lichtschranke oder mittels elektromagnetischer Signale kenntlich gemacht werden kann, wird eine nicht dargestellte Einfahrt-Parkschranke geöffnet.

Am Ende eines Parkvorganges gibt der Benutzer die Parkkarte 2 in einen Schlitz einer nicht dargestellten Kasse ein. Dort wird die Kennung bzw. die übrigen Parkdaten gelesen und per Rechner die Einfahrtzeit mit der Ist-Zeit verglichen und daraus die Parkgebühr ermittelt und angezeigt. Nach der Bezahlung der angefallenen Parkgebühr wird die Parkkarte 2 von der Kasse freigegeben. Der Rechner übernimmt die neue Zeit und addiert eine Karenzzeit hinzu, in der der Parkhausbenutzer ausgefahren sein muß. Alternativ kann die Karenzzeit in die Parkkarte eingeschrieben werden.

Mit der noch immer gleichen Parkkarte 2 fährt der Benutzer zur Ausfahrt und wirft diese in den Seitenschacht 13 der Ein- und Ausgabevorrichtung ein, von wo sie in den zentralen Leitschacht 11 und zur Meßstelle 24 gelangt. An der Meßstelle 24 wird die Kennung mit den Rechnerdaten bzw. der Karenzzeit verglichen. Bei Gültigkeit öffnet eine Ausfahrtschranke und die Parkkarte 2 fällt durch den Leitschacht 11 in den Auffangbehälter 21. Die Weiche 20 befindet sich dabei in der gestrichelten Stellung. Bei Ungültigkeit sperrt die Weiche 20 den Leitschacht 11, so daß die Parkkarte 2 in den Seitenschacht 12 für die Ausgabe gelenkt und wieder zurückgegeben wird.

Das Parksystem läßt sich ebenfalls für Dauerparker oder Mieter anwenden.

Fig. 2 zeigt ein zweites Ausführungsbeispiel einer Ein- und Ausgabevorrichtung für eine Ein- und/oder Ausfahrtkontrollstation eines Parksystems zur gebührenpflichtigen Betätigung einer Parkschranke, bei dem an einem Vorratsbehälter 1 für Parkkarten 2 unter Zwischenschalten einer Vereinzelungseinrichtung 3 ein Fallschacht 4 anschließt.

Die Vereinzelungseinrichtung 3 wird hier von einer im Bodenabschnitt des Vorratsbehälters 1 vorgesehenen Austrittsöffnung für jeweils eine Parkkarte 2 gebildet, der geeignete, im oder am Behälter angeordnete Zuführvorrichtungen und/oder Separatoren zur Vereinzelung der Parkkarten 2 zugeordnet sein können.

Der Fallschacht 4 übernimmt in einem Einlaufabschnitt 16 die nacheinander aus einem Vorrat abgegebenen Parkkarten 2 in vorzugsweise aufrechter und damit rollfähigen Stellung. In dem Einlaufabschnitt 16, der mit einem abwärts geneigten Gefälle versehen ist und mit seinen seitlichen Abmessungen an die der Parkkarten 2 angepaßt ist, laufen die Parkkarten 2 jeweils einzeln nacheinander in den Leitschacht 11. Gemäß einer nicht dargestellten Ausführungsform kann der Einlaufabschnitt 16 auch entfallen.

Gegenüber dem ersten Ausführungsbeispiel unterscheidet sich der Fallschacht 4 hier im übrigen im wesentlichen dadurch, daß die an den Seitenschächten 12, 13 vorbeilaufende Seitenwand 14 des Leitschachts 11 nur stückweise ausgebildet ist und die bodenseitige Seitenfläche 19 des Seitenschachts 12 an einer Wippe 29 ausgebildet ist.

Eine im wesentlichen offene Gestaltung des Leitschachts 11 gegenüber den Seitenschächten 12, 13 ist möglich, da aufgrund der vorzugsweisen Anordnung des Eingabeschachts 13 oberhalb des Ausgabeschachts 12 die Parkkarten 2 im oberen Abschnitt des Leitschachts 11 im Falle eines seitlichen Ausrückens automatisch in den Leitschacht 11 zurückgeführt werden. Das Passieren der Meßstelle 24 ist durch ein Seitenwandteilstück 30, das eine Zwangsführung der Parkkarten 2 im Bereich der Meßstelle 24 ermöglicht, sichergestellt. Auf der Höhe der Abzweigung des Seitenschachts 12 für die Ausgabe sorgt die Wippe 29 für eine Zwangsführung der herabfallenden Parkkarten 2.

Wie bereits dargelegt, werden die Parkkarten 2 in dem Fallschacht 4 unter dem Einfluß der Schwerkraft abwärts bewegt. Wesentliche Funktionselemente für die Festlegung der Bewegungsrichtungen sind dabei innerhalb der Seitenschächte 12, 13 jeweils die Seitenflächen 19, 22, die diese Schächte 12, 13 bodenseitig begrenzen und deshalb als Roll- und Gleitflächen dienen. Folglich wird in dem Seitenschacht 12 durch die Neigung der als Lauffläche dienenden Seitenfläche 19 die Bewegungsrichtung der Parkkarte 2 in diesem Seitenschacht 12 festgelegt. Um diese Neigung und damit das Gefälle im Seitenschacht 12 für die Ausgabe variieren zu können,ist die Seitenfläche 19 an der Wippe 29 ausgebildet, die hierzu vorzugsweise um eine Achse senkrecht zur Längsebene des Fallschachts 4 schwenkbar ist. Die Schwenkrichtung ist durch den Pfeil C angedeutet.

Die Wippe 29 ist in eine Schwenkposition verfahrbar, bei der der Seitenschacht 12 ein abwärts und von dem Leitschacht 11 weggerichtetes Gefälle besitzt. In dieser Schwenkposition versperrt die Wippe 29 mit ihrem dem Leitschacht 11 zugewandten Ende 31 den Durchgang des Leitschachts 11 und übernimmt damit die Aufgabe der Weiche 20 gemäß dem ersten Ausführungsbeispiel. Eine in den Seitenschacht 12 gelangende Parkkarte 2 rollt dann bis zu einer Entnahmeöffnung 32. In der Entnahmeöffnung gehalten werden kann die jeweilige Parkkarte 2 mittels eines nach oben abgewinkelten Arms 33 an der Wippe 29. Der Arm 33 verhindert somit ein unerwünschtes Herausfallen der Parkkarten 2 aus der Ein- und Ausgabevorrichtung. Entweder können die jeweils so in der Entnanmeöffnung 32 angeordneten Parkkarten per Hand entnommen oder mitteis einer verstärkten Schwenkstellung mit erhöhter Neigung der Wippe 29 ausgeworfen werden.

Für eine Überwachung der Entnahme der jeweiligen Parkkarten aus der Entnahmeöffnung 32 kann eine Lichtschranke im Bereich der Entnahmeöffnung 32 vorgesehen sein. Sofern die Parkkarten 2 jeweils eine elektromagnetische Signalquelle aufweisen, kann über eine zugeordnete Empfangseinrichtung im Fallschacht 4 die Unterbrechung des Signalempfangs zum Erkennen der Entnahme genutzt werden. Die Empfangseinrichtung kann mit der Meßstelle 24 verknüpft sein. Diese Ausführungen zur Überwachung der Entnahme gelten auch für das erste Ausführungsbeispiel.

Bei den Parkvorgängen kommt es immer wieder vor, daß abgerufene Parkkarten 2, also solche, die in die Entnahmeöffnung 32 bewegt worden sind, dann doch nicht entnommen werden. Solche Parkkarten 2 müssen zurückgenommen werden, und zwar vorzugsweise innerhalb eines wählbaren Zeitraums, beispielsweise 30 Sekunden. Die Wippe 29 ermöglicht eine solche Rücknahme durch ihr Schwenken in eine Stellung mit einer abwärts auf den Leitschacht 11 zugerichteten Neigung der Lauffläche 19. Eine in der Entnahmeöffnung 32 sich befindende Parkkarte 2 läuft dann in den gleichen, für die Ausgabe vorgesehenen Seitenschacht 12 zurück. Weiterhin wird dafür gesorgt, daß das dem Leitschacht 11 zugewandte Ende 31 den Durchgang im Leitschacht 11 freigibt. so daß die nicht entnommene Parkkarte 2 in den Aufnahmebehälter 21 fallen kann. Diese Schwenkstellung der Wippe 29 ermöglicht es auch, die durch den Seitenschacht 13 für die Eingabe zurückgegebenen Parkkarten 2 in den Aufnahmebehälter 21 fallen zu lassen.

Die verschiedenen Bewegungsrichtungen, die die Parkkarten 2 in dem Fallschacht 4 einnehmen können, sind durch Pfeile markiert. Die Abwicklung des Parkvorganges ist vergleichbar mit dem zum ersten Ausführungsbeispiel beschriebenen.

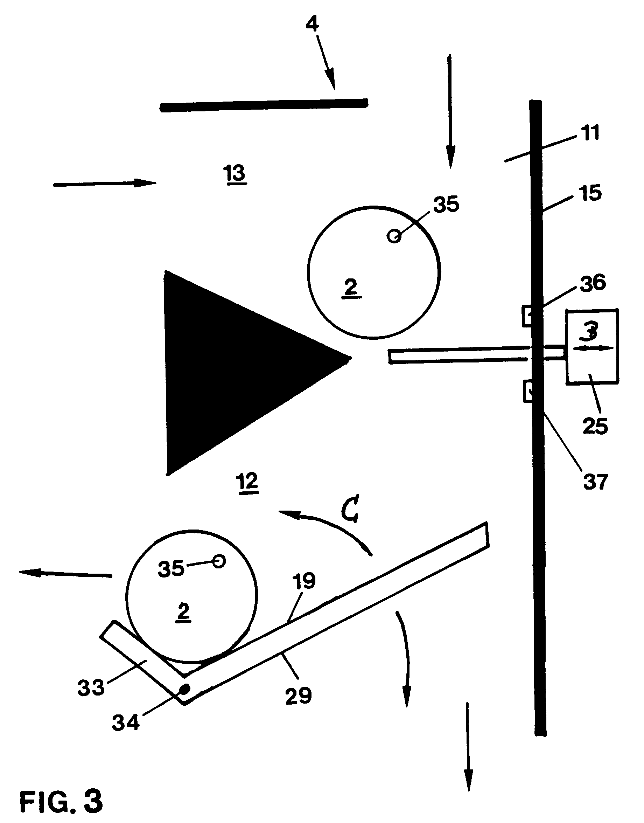

Fig. 3 zeigt schematisch ein Teilstück eines dritten Ausführungsbeispiels einer Ein- und Ausgabevorrichtung, das im wesentlichen dem zweiten Ausführungsbeispiel gleicht. Ein Unterschied liegt in der Anordnung des Schwenkpunkts 34 der Wippe 29 in bezug auf die Vorderkante der Ein- und Ausgabevorrichtung und damit auch die Anordnung des abgewinkelten Arms 33. Gegenüber Fig. 2 ist die Schwenkstelle 34 und die Ausrichtung des abgewinkelten Arms 33 so gewählt, daß die jeweiligen Parkkarten 2 in der in Fig. 3 dargestellten Entnahmestellung über die Vorderkante der Ein- und Ausgabevorrichtung vorragen und deshalb für einen Parkhausbenutzer einfach entnehmbar sind.

Desweiteren sind die Parkkarten 2 mit einer elektromagnetischen Signalquelle 35 versehen. Anstelle einer Meßstelle kann eine mehrteilige Meßstelle im Leitschacht 11 vorgesehen sein, die insbesondere getrennte, satellitenartige Empfangsvorrichtungen 36, 37 aufweisen kann, um für die Überwachung der Entnahme einer Parkkarte eine Empfangseinrichtung 37 zu besitzen, die von der oder den Empfangseinrichtungen 36 für das Lesen bzw. Kommunizieren mit den Parkkarten 2 zur Ermittlung und/oder Verarbeitung der Parkdaten getrennt ist.

## Patentansprüche

1. Ein- und Ausgabevorrichtung für runde, ein Identifikations- und/oder Kommunikationselement aufweisende Parkkarten (2) zur gebührenpflichtigen Betätigung einer Parkschranke (39), mit einem Vorratsbehälter (1), der bodenseitig eine Vereinzelungseinrichtung (3) für die Parkkarten (2) aufweist, einem anschließenden Fallschacht (4) mit mindestens einem zentralen Leitschacht (11) und davon abzweigenden, eine jeweilige Neigung aufweisenden Seitenschächten (12, 13) für eine rollende Aus- und Eingabe von Parkkarten (2) unter Schwerkraft und einer Meßstelle (24) im zentralen Leitschacht (11) für ein Lesen der auszugebenden und/oder zurückgegebenen Parkkarten (2), die mit einer Steuerung zur Betätigung der Parkschranke (39) verbunden ist.

2. Ein- und Ausgabevorrichtung nach Anspruch 1, dadurch gekennzeichnet, daß der mindestens eine Leitschacht (11), gegebenenfalls im Anschluß an einen Einlaufbereich (16), und die Seitenschächte (12, 13) Abmessungen aufweisen, die ein Umkippen der Parkkarten (2) aus einer aufrechten, rollfähigen Stellung bei ihrer Bewegung durch den Fallschacht (4) vermeiden.

3. Ein- und Ausgabevorrichtung nach Anspruch 1 oder 2, dadurch gekennzeichnet, daß die Seitenschächte (12, 13) zu dem mindestens einen Leitschacht (11) derart angeordnet sind, daß die Parkkarten (2) über die Umfangsflächen einlaufen.

4. Ein- und Ausgabevorrichtung nach einem der Ansprüche 1 bis 3, dadurch gekennzeichnet, daß der Leitschacht (11) in einen Auffangbehälter (21) für benutzte und wieder in den Vorratsbehälter (1) einzubringende Parkkarten (2) führt.

5. Ein- und Ausgabevorrichtung nach einem der Ansprüche 1 bis 4, dadurch gekennzeichnet, daß ein Eingabeschacht (13) oberhalb eines Ausgabeschachts (12) vom Leitschacht (11) abgezweigt ist und zwischen den Mündungsbereichen der Schächte (12, 13) im Leitschacht (11) die Meßstelle (24) angeordnet ist.

6. Ein- und Ausgabevorrichtung nach einem der Ansprüche 1 bis 5, dadurch gekennzeichnet, daß am Eintritt in einen Ausgabeschacht (12) eine den Leitschacht (11) wahlweise sperrende Weiche (20) vorgesehen ist.

7. Ein- und Ausgabevorrichtung nach einem der Ansprüche 1 bis 5, dadurch gekennzeichnet, daß die bodenseitige Lauffläche (19) des Ausgabeschachtes (12) als eine die Neigung des Ausgabeschachtes (12) variierende und zum Sperren des Leitschachtes (11) geeignete Wippe (29) ausgebildet ist.

8. Ein- und Ausgabevorrichtung nach Anspruch 7, dadurch gekennzeichnet, daß die Wippe zwei zueinander angewinkelte Laufflächen (19, 33) umfaßt, wobei die ausgabeseitige Lauffläche (33) als Anschlagfläche für eine Entnahmeposition einer jeweils auszugebenden Parkkarte (2) ausgebildet ist.

9. Ein- und Ausgabevorrichtung nach einem der Ansprüche 1 bis 8, dadurch gekennzeichnet, daß der Fallschacht (4) eine den Durchgang sperrende Arretiervorrichtung (25) zum zeitweiligen Halten der Parkkarten im Bereich der Meßstelle (24) aufweist.

10. Ein- und Ausgabevorrichtung nach einem der Ansprüche 1 bis 9, dadurch gekennzeichnet, daß der Meßstelle (24) mehrere im Fallschacht (4) verteilt angeordnete Signalempfangseinrichtungen (36, 37) zur Wechselwirkung mit an oder in den Parkkarten eingebauten Signalquellen zugeordnet sind.

11. Ein- und Ausgabevorrichtung nach einem der Ansprüche 1 bis 10, dadurch gekennzeichnet, daß der mindestens eine zentrale Leitschacht (11) ein im wesentlichen senkrecht ausgerichteter Fallschacht ist.

12. Ein- und Ausgabevorrichtung nach einem der Ansprüche 1 bis 10, dadurch gekennzeichnet, daß die Vereinzelungseinrichtung (3) ein schachtförmiges Verengungsteil (5) am Boden des Vorratsbehälters (1) zum Stapeln von Parkkarten (2) umfaßt, das eine den Durchmesser der Parkkarten (2) nur geringfügig übersteigende Breite besitzt und über einem mit dem Leitschacht (11) in Verbindung stehenden Vereinzelungskanal (6) für einen seitlichen Angriff eines Abstreifers (7) an den Parkkarten (2) angeordnet ist.

13. Ein- und Ausgabevorrichtung nach Anspruch 11, dadurch gekennzeichnet, daß der Abstreifer (7) einen unterhalb des Verengungsteils (5) verfahrbaren Schieber (10) mit einer Ausnehmung für die Aufnahme jeweils einer Parkkarte (2) umfaßt.

## Claims

1. Feeding-in and issuing device for round parking tickets (2) having an identification and/or communication element, for the fee-paying operation of a parking barrier (39), which device has a supply container (1) that has at its base a separating device (3) for the parking tickets (2), a chute (4) connected thereto and having at least one central leading chute (11) and side chutes (12, 13), branching off therefrom and each being at an incline, for the rolling issuing and feeding-in of parking tickets (2) under the influence of gravity, and a measuring point (24) in the central leading chute (11) for reading the parking tickets (2) to be issued and/or returned, which measuring point is connected to a control for the operation of the parking barrier (39).

2. Feeding-in and issuing device according to claim 1, characterised in that the dimensions of the leading chute (11), of which there is at least one, optionally being connected to an intake region (16), and of the side chutes (12, 13) are such that tipping over of the parking tickets (2) out of an upright position in which they are able to roll during their movement through the chute (4) is avoided.

3. Feeding-in and issuing device according to claim 1 or 2, characterised in that the side chutes (12, 13) are arranged in relation to the leading chute (11), of which there is at least one, in such a manner that the parking tickets (2) run in by way of their circumferential surfaces.

4. Feeding-in and issuing device according to any one of claims 1 to 3, characterised in that the leading chute (11) leads into a collecting container (21) for used parking tickets (2) that are to be re-introduced into the supply container (1).

5. Feeding-in and issuing device according to any one of claims 1 to 4, characterised in that a feed-in chute (13) branches off from the leading chute (11) above an issuing chute (12), and the measuring point (24) is arranged between the regions at which the chutes (12, 13) open into the leading chute (11).

6. Feeding-in and issuing device according to any one of claims 1 to 5, characterised in that a switch element (20) that selectively blocks the leading chute (11) is provided at the entry to an issuing chute (12).

7. Feeding-in and issuing device according to any one of claims 1 to 5, characterised in that the bottom running surface (19) of the issuing chute (12) is in the form of a rocker (29) that varies the incline of the issuing chute (12) and is suitable for blocking the leading chute (11).

8. Feeding-in and issuing device according to claim 7, characterised in that the rocker comprises two running surfaces (19, 33) that are angled towards one another, the running surface (33) at the issuing side being in the form of a stop surface for a removal position of a parking ticket (2) to be issued.

9. Feeding-in and issuing device according to any one of claims 1 to 8, characterised in that the chute (4) has a stop device (25) that blocks passage through in order to detain the parking tickets for a time in the region of the measuring point (24).

10. Feeding-in and issuing device according to any one of claims 1 to 9, characterised in that there are associated with the measuring point (24) a plurality of signal receiver devices (36, 37) distributed in the chute (4) for interaction with signal sources incorporated on or in the parking tickets.

11. Feeding-in and issuing device according to any one of claims 1 to 10, characterised in that the central leading chute (11), of which there is at least one, is a substantially vertically aligned chute.

12. Feeding-in and issuing device according to any one of claims 1 to 10, characterised in that the separating device (3) comprises a chute-shaped narrowed portion (5) at the base of the supply container (1) for the piling up of parking tickets (2), the width of which narrowed portion only slightly exceeds the diameter of the parking tickets (2) and which is arranged above a separating channel (6), connected to the leading chute (11), for lateral engagement of the parking tickets (2) by a stripper element (7).

13. Feeding-in and issuing device according to claim 11, characterised in that the stripper element (7) comprises a slide element (10) that travels beneath the narrowed portion (5), which slide element has a recess for receiving one parking ticket (2) at a time.

## Revendications

1. Installation d'introduction et de délivrance pour des tickets de parking (2) ronds, présentant un élément d'identification et/ou de communication pour l'actionnement d'une barrière (39) de parking soumis à une taxe, comprenant un réservoir (1) qui présente à son fond un dispositif d'individualisation (3) pour des tickets de parking (2), un réceptacle adjoint (4) avec au moins un couloir de conduction central (11) et des couloirs latéraux (12, 13) qui s'en séparent et présentent respectivement une pente pour une délivrance et une pente pour une introduction de tickets de parking (2) roulant sous l'influence de la gravitation et un poste de mesure (24) dans le couloir de conduction central (11), pour une lecture des tickets de parking (2) à délivrer et/ou rendus, qui est associé avec une commande de l'actionnement de la barrière (39) de parking.

2. Installation d'introduction et de délivrance selon la revendication 1, caractérisée en ce que ledit au moins un couloir de conduction (11), le cas échéant à la suite d'une région d'entrée (16), et les couloirs latéraux (12, 13) présentent des dimensions qui empêchent un basculement des tickets de parking (2) d'une position droite de roulement lors de leurs mouvements à travers le réceptacle (4).

3. Installation d'introduction et de délivrance selon la revendication 1 ou 2, caractérisée en ce que les couloirs latéraux (12, 13) sont agencés relativement audit au moins un couloir de conduction (11) de manière que les tickets de parking (2) arrivent sur leurs surfaces périphériques.

4. Installation d'introduction et de délivrance selon l'une des revendications 1 à 3, caractérisée en ce que le couloir de conduction (11) conduit dans un récipient de réception (21) pour des tickets de parking (2) utilisés et à réintroduire dans le réservoir (1).

5. Installation d'introduction et de délivrance selon l'une des revendications 1 à 4, caractérisée en ce qu'un couloir d'introduction (13) situé au-dessus d'un couloir de délivrance (12) se sépare du couloir de conduction (11) et en ce que le poste de mesure (24) est agencé entre les endroits d'embranchement des couloirs (12, 13) dans le couloir de conduction (11).

6. Installation d'introduction et de délivrance selon l'une des revendications 1 à 5, caractérisée en ce qu'à l'entrée dans un couloir de délivrance (12) est prévue une bascule de direction (20) barrant sélectivement le couloir de conduction (11).

7. Installation d'introduction et de délivrance selon l'une des revendications 1 à 5, caractérisée en ce que la surface de roulement (19) côté fond du couloir de délivrance (12) est formée par une bascule (29) variant la pente du couloir de délivrance (12) et adaptée pour barrer le couloir de conduction (11).

8. Installation d'introduction et de délivrance selon la revendication 7, caractérisée en ce que la bascule comprend deux surfaces de roulement (19, 23) décalées angulairement l'une relativement à l'autre, la surface de roulement du côté de la délivrance (33) étant formée comme surface de butée pour une position de prélèvement d'un ticket de parking (2) qui est à délivrer.

9. Installation d'introduction et de délivrance selon l'une des revendications 1 à 8, caractérisée en ce que le réceptacle (4) présente un dispositif d'arrêt (25) barrant le passage pour le maintien temporaire des tickets de parking dans la région du poste de mesure (24).

10. Installation d'introduction et de délivrance selon l'une des revendications 1 à 9, caractérisée en ce que plusieurs dispositifs de réception de signal (36, 37) sont répartis dans le réceptacle (4) pour interagir avec les sources de signaux aménagées sur ou dans les tickets de parking.

11. Installation d'introduction et de délivrance selon l'une des revendications 1 à 10, caractérisé en ce que ledit au moins un couloir de conduction central (11) est un réceptacle orienté essentiellement verticalement.

12. Installation d'introduction et de délivrance selon l'une des revendications 1 à 10, caractérisée en ce que le dispositif d'individualisation (3) comprend une partie de resserrement (5) en forme de couloir, située au fond du réservoir (1), pour l'empilement des tickets de parking (2), ce dispositif possédant une largeur dépassant que de peu le diamètre des tickets de parking et étant agencé au-dessus d'un canal d'individualisation (6), en liaison avec le couloir de conduction (11), pour une action latérale d'un détacheur (7) sur les tickets de parking (2).

13. Installation d'introduction et de délivrance selon la revendication 11, caractérisée en ce que le détacheur (7) comprend un poussoir (10) susceptible d'être translaté sous la partie de resserrement (5) avec un évidement pour la réception d'un ticket de parking (2).
